# FASCICULE DE BREVET EUROPEEN

(11) **EP 2 574 501 B1**
(45) Date de publication et mention de la délivrance du brevet: **31.08.2022**
(21) Numéro de dépôt: 12185639.7
(22) Date de dépôt: 24.09.2012
(51) Int. Cl.: B60Q 1/00, B60Q 1/26, F21S 41/19, F21S 41/39, F21S 45/47, F21S 45/49, F21S 41/36

(54) **Dispositif d'éclairage et/ou de signalisation pour véhicule**
Vorrichtung zur Beleuchtung und/oder Signalisierung für ein Fahrzeug
Lighting and/or signalling device for vehicle

(30) Priorité: 27.09.2011 FR 1158612
(43) Date de publication de la demande: 03.04.2013
(73) Titulaire: VALEO VISION, 93012 Bobigny Cedex (FR)
(72) Inventeur: Moisy, Eric, 23009 Jaean (ES); Garcia, Isidro, 23006 Jaen (ES); Aguilar del Moral, Jose-Antonio, 23006 Jaen (ES); Cabanne, Damien, 23600 Martos (ES); Contreras Luque, Antonio, 23600 Martos (Jaen) (ES); Le Bars, Jean-François, 89275 Elchingen (DE)
(74) Mandataire: Valeo Visibility

(56) Documents cités:
- WO-A1-2006/066531
- WO-A1-2011/111476
- DE-A1-102009 022 723
- FR-A1- 2 379 759
- KR-A- 20100 055 300

## Description

L'invention a trait à un dispositif d'éclairage et/ou de signalisation pour véhicule.

L'utilisation de sources lumineuse du type diode à électroluminescence (LED) est de plus en plus courante dans les projecteurs et les feux de signalisation de véhicules automobiles. Les LEDs ont une durée de vie sensiblement plus longue que les lampes à incandescence, à savoir une durée de vie courante supérieure à 10.000 heures, allant même jusqu'à 35.000 et même 50.000 heures, soit nettement plus que la durée de vie d'un véhicule automobile. La durée de vie d'une LED est cependant liée à ses conditions de fonctionnements, à savoir sa température de fonctionnement et le courant la traversant. Ces conditions de fonctionnement sont généralement maitrisées si bien que les LEDs implantées dans des projecteurs et dispositifs de signalisation de véhicule gardent une durée de vie en principe supérieure à la durée de vie du véhicule et ne sont par conséquent généralement pas démontables ou remplaçables.

Il n'en est pas de même pour les projecteurs et dispositifs de signalisation de véhicule à lampes classiques à incandescence qui doivent pouvoir être remplacées facilement. La réglementation notamment européenne relative à l'éclairage et la signalisation des véhicule impose par ailleurs depuis récemment que l'utilisateur du véhicule puisse accéder aux lampes classiques en vue de leur remplacement.

La durée de vie des LEDs embarquées dans des projecteurs et dispositifs de signalisation de véhicule peut également être influencée, plus particulièrement raccourcie, en fonction de divers paramètres liés essentiellement à l'environnement direct. Compte tenu du caractère récent de l'utilisation de LEDs pour l'éclairage et la signalisation des véhicules, il n'existe à l'heure actuelle que très peu d'expérience quant à la tenue des LEDs à long terme dans ces conditions de fonctionnement. Or beaucoup s'accordent à ce que des défauts risquent d'apparaître avec le temps et que des remplacements de LEDs pourront s'avérer nécessaire.

Le document de brevet WO 2006/066531 A1 divulgue un module de source lumineuse du type LED à montage rapide. Outre une ou plusieurs sources lumineuses du type LED, ce module comprend un radiateur de refroidissement de la ou des sources lumineuses ainsi qu'un dispositif de fixation rapide du type baïonnette. Cet enseignement est intéressant d'un point de vue facilité de montage, notamment du fait que l'ensemble source(s) lumineuse et radiateur correspondant peut être rapidement et facilement remplacé. Le remplacement d'une ou plusieurs sources lumineuses d'un module d'éclairage et/ou de signalisation, en particulier d'un projecteur, est cependant source de déréglage du faisceau. Ceci est particulièrement vrai pour les projecteurs à LEDs avec coupure du faisceau. En effet, la position de la source lumineuse a une influence directe sur la coupure. La solution proposée par ce document ne permet par conséquent pas à l'utilisateur du véhicule de remplacer la source lumineuse dans la mesure où un réglage minutieux sera ensuite nécessaire. Un tel réglage n'est pas à la portée d'un service d'entretien courant de véhicule. Un démontage du projecteur du véhicule sera par conséquent nécessaire.

Le document de brevet FR 2 917 348 A1 divulgue un dispositif d'éclairage et/ou de signalisation pour véhicule automobile où la source lumineuse est portée par un support amovible par rapport au boîtier du dispositif. Plus précisément, la glace du dispositif comprend une ouverture au travers de laquelle la source lumineuse et sont support sont disposés. La source lumineuse éclaire essentiellement dans une direction opposée à la direction d'éclairage et/ou de signalisation du dispositif, un réflecteur du type parabolique étant disposé dans le boîtier en face de la source lumineuse de manière à réfléchir les rayons émis par la source selon la direction principale d'éclairage et/ou de signalisation du dispositif. L'accès à la source lumineuse a lieu depuis l'extérieur du dispositif et du véhicule. Cette disposition présente l'avantage de ne pas requérir la présence d'un espace vide pour le passage de la main d'un intervenant ou d'un outil utilisé par celui-ci à l'occasion d'un remplacement de la source lumineuse. Ce montage est cependant essentiellement limité aux sources lumineuses du type à incandescence. En effet, les sources lumineuses du type LED sont disposées sur un circuit imprimé (PCB pour « printed circuit board ») équipé d'un radiateur de refroidissement de la ou des LEDs. Le montage prévu dans cet enseignement est difficilement applicable à une source lumineuse du type LED en raison de l'encombrement de ces composants.

Le document de brevet FR 2 727 190 A1 divulgue un projecteur pour véhicule automobile, où le boîtier comprend un couvercle arrière monté pivotant sur le boîtier. L'ouverture du boîtier par pivotement du couvercle donne un accès à la source lumineuse principale. Le couvercle supporte par ailleurs une source lumineuse supplémentaire assurant la fonction feu de position. La solution technique divulguée dans ce document est intéressante d'un point de vue facilité de remplacement des sources lumineuses mais est difficilement applicable à des sources lumineuses du type LED.

De manière générale, il est à noter que l'architecture des sources lumineuses du type LED est radicalement différente de celle des sources lumineuses à incandescence. Comme déjà mentionné, les LEDs sont habituellement disposées directement sur un platine (PCB) qui est pourvue d'un ou plusieurs radiateurs de refroidissement de la ou des LEDs. Cet agencement confère à la LED et ses équipements un certain encombrement. De plus, certains projecteurs ou feux arrières peuvent présenter des agencements de LEDs leur conférant un caractère individuel ou encore une « signature ». Les remplacements d'une ou plusieurs des LEDs d'un tel dispositif d'éclairage peut nécessiter la dépose du dispositif en vue d'une intervention en atelier spécialisé.

Le document KR 2010 0055300 A divulgue un dispositif d'éclairage et/ou de signalisation comprenant un module avec au moins une source lumineuse de type LED, le module étant monté sur un support à l'aide de moyens de positionnement à glissières.

L'invention a pour objectif de proposer une solution palliant au moins un des inconvénients sus mentionnés. Plus particulièrement, l'invention a pour objectif de proposer une solution apte à faciliter le remplacement de sources lumineuses du type LED de projecteurs et de feux de signalisation de véhicule.

L'invention a pour objet un dispositif d'éclairage et/ou de signalisation pour véhicule, comprenant les caractéristiques de la revendication 1.

Selon un mode avantageux de l'invention, une composante de la direction de glissement des moyens à glissière(s) correspond à l'axe optique du module.

Selon un autre mode avantageux de l'invention, les moyens de positionnement rapide à glissière(s) sont disposés majoritairement latéralement par rapport au module. Préférentiellement ils sont disposés sous le module. Ce dernier peut en effet comprendre une base sous laquelle les moyens de positionnement sont disposés.

Selon un encore autre mode avantageux de l'invention, les moyens de positionnement rapide à glissière(s) sont configurés de manière à ce que le positionnement du module depuis un engagement avec le support jusqu'à une position finale sur le support s'opère exclusivement par un mouvement de translation dudit module. Selon un encore autre mode avantageux de l'invention, le module comprend un radiateur de dissipation de la chaleur de la ou d'au moins une des sources lumineuses, les moyens de positionnement rapide étant sur le radiateur, les moyens de positionnement étant préférentiellement formés dans le matériau du radiateur.

Selon un encore autre mode avantageux de l'invention, la direction de glissement des moyens de positionnement rapide à glissière(s) s'étendent longitudinalement dans un plan parallèle à un plan vertical comprenant l'axe optique du module.

Selon un encore autre mode avantageux de l'invention, la direction de glissement des moyens de positionnement rapide à glissière(s) s'étend longitudinalement dans un plan transversal formant un angle d'inclinaison avec un plan horizontal qui est compris entre 20° et 70°, plus préférentiellement entre 30° et 50°.

Selon un encore autre mode avantageux de l'invention, le plan transversal dans lequel la direction de glissement des moyens de positionnement rapide à glissière(s) du module s'étend, est incliné vers le bas et vers l'avant du module.

Selon un mode avantageux de l'invention, une composante de la direction de glissement des moyens à glissière du support correspond l'axe optique du module.

Selon un encore autre mode avantageux de l'invention, les moyens de positionnement rapide à glissière(s) du support sont formés dans la surface de montage, le support comprenant des ailettes de refroidissement à l'arrière de la face de montage.

Selon un mode avantageux de l'invention, au moins un du module et du support comprend des moyens de fixation du module au support.

Selon un autre mode avantageux de l'invention, les moyens de fixation sont configurés pour empêcher un mouvement de translation entre le module et le support, lesdit moyens étant préférentiellement à serrage et/ou blocage.

Les mesures techniques de l'invention qui viennent d'être décrites permettent un remplacement aisé de la ou des sources lumineuses sans pour autant dérégler le faisceau d'éclairage ou de signalisation. En effet, le fait de remplacer le module complet permet de remplacer les éléments optiques essentiels du dispositif d'éclairage et/ou de signalisation. Ces éléments sont préréglés dans le module ; son remplacement permet par conséquent d'une perte de qualité potentiellement importante du faisceau d'éclairage et/ou de signalisation. Cette facilité d'enlèvement du module notamment en cas de défaillance d'une ou plusieurs des sources lumineuses LED permet de remplacer les LEDs et leur support par de nouveaux modèles de LEDs potentiellement plus performantes. En effet, compte tenu d'évolution des LEDs, de nouveaux modèles vont remplacer les anciens. Le fait de pouvoir remplacer tout le module va permettre de s'affranchir des modèles obsolètes de LEDs et de prévoir des modules de remplacement avec des LEDs de technologie plus récente et plus courante. Cette solution va donc permettre une standardisation des LEDs et, partant, une réduction de coûts.

De plus, les mesures techniques de l'invention qui viennent d'être décrites sont particulièrement intéressantes pour les modules volumineux, comme notamment les modules dits à « signature », c'est-à-dire pourvus de fonctions d'éclairage de style.

D'autres caractéristiques et avantages de la présente invention seront mieux compris à l'aide de la description et des dessins parmi lesquels :
- la figure 1 est une vue en coupe d'un projecteur de véhicule automobile, conforme à l'invention ;
- la figure 2 est une vue en perspective depuis l'arrière du boîtier du projecteur de la figure 1 ;
- la figure 3 est une vue en coupe du projecteur de la figure 1, montrant l'étape d'ouverture du boîtier en vue de l'extraction du module d'éclairage ;
- la figure 4 est une vue en coupe du projecteur de la figure 1, montrant l'étape d'extraction du module d'éclairage ;
- la figure 5 est une vue en coupe du projecteur de la figure 1, montrant le boîtier après extraction du module d'éclairage ;
- la figure 6 est une vue en coupe du projecteur de la figure 1, montrant l'étape d'insertion d'un module d'éclairage de remplacement ;
- la figure 7 est une vue en coupe du projecteur de la figure 1, montrant le boîtier où le module d'éclairage de remplacement est mis en place ;
- la figure 8 est une vue en plan et une vue en élévation d'un moyen de blocage du module par rapport à son support dans le projecteur des figures 1 à 7;
- la figue 9 est une vue en coupe de la base du module et de son support du projecteur des figures 1 à 7 ;
- la figure 10 est une vue en perspective de la base du module et du support de la figure 9, illustrant les moyens de positionnement et fixation à glissières.

Dans la description qui va suivre, un exemple de réalisation de l'invention va être décrit de manière assez détaillée. Pour des raisons de commodité et de clarté d'exposé, cet exemple a trait à un dispositif d'éclairage, c'est-à-dire à un projecteur et son module d'éclairage correspondant situé habituellement à l'avant des véhicules. Il est cependant entendu que l'invention et plus particulièrement les solutions techniques des exemples qui vont suivre s'appliquent également à des modules de signalisation, c'est-à-dire notamment à des modules pour des feux de signalisation situés habituellement à l'arrière des véhicules.

Dans la description qui va suivre, il sera fait référence à l'axe optique du dispositif d'éclairage. Dans ce contexte, l'utilisation des termes « avant » et « arrière » sont à comprendre en relation avec le sens d'éclairage des modules. Lorsque le module est disposé à l'avant du véhicule, l'expression « avant » sera en correspondance avec la direction d'avancement normale du véhicule, alors qu'elle sera opposée à cette direction lorsque le module est disposé à l'arrière du véhicule.

Bien que l'invention soit orientée vers des applications dans le domaine des véhicules, les dispositifs et modules d'éclairage et de signalisation peuvent être orientés autrement que dans les figures. Les termes relatifs tels que « avant », « arrière », « supérieur », « inférieur », etc. utilisés en relation avec les figures qui illustrent une orientation bien particulière des modules d'éclairage ne sont par conséquent pas à interpréter de manière limitative.

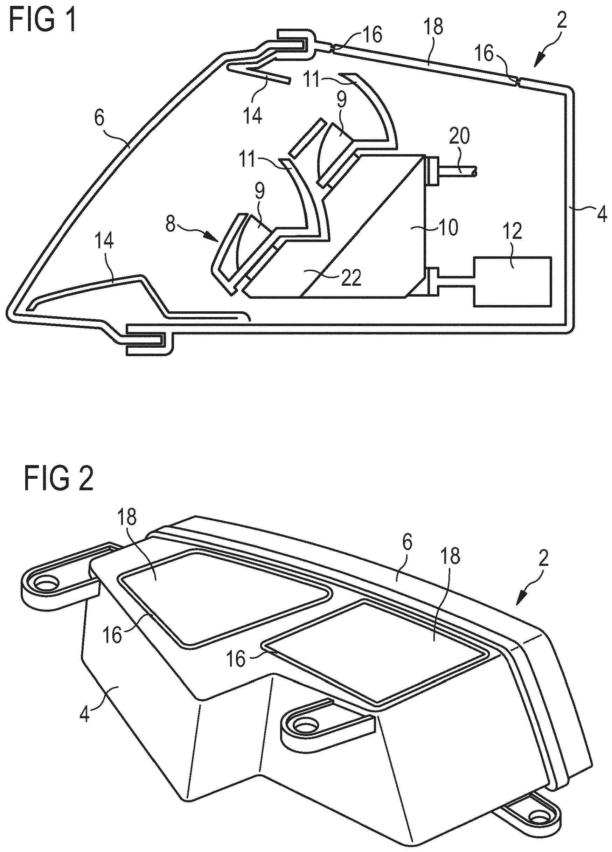

La figure 1 illustre un projecteur 2 comprenant un boîtier 4 définissant un volume confiné, ledit volume étant fermé par une glace 6 disposée à l'avant du boîtier. Le boîtier renferme un module d'éclairage 8 comprenant plusieurs sous-modules comprenant, chacun, au moins une source lumineuse du type LED et une premier réflecteur elliptique 9 et un deuxième réflecteur parabolique 11. Le module d'éclairage 8 comprend une base 22 servant de refroidisseur des LEDs et assurant la fixation du module à son support 10. Ce dernier est fixé au boîtier 2 via des moyens de fixation à rotule 20 et au moins un moyen de réglage en hauteur 12 du faisceau d'éclairage produit par le module 8. Ce moyen de réglage 12 peut comprendre un moteur électrique et une vis de réglage animée par le moteur électrique et apte à assurer un déplacement essentiellement en translation du point de fixation du support audit moyen 12. Le projecteur 2 peut comprendre également un ou plusieurs masques de style 14.

Le boîtier 4 du projecteur 2 comprend une prédécoupe 16 à une zone supérieure. La prédécoupe décrit un contour définissant une ouverture 18 d'accès au volume intérieur du projecteur. Cette ouverture 18 peut prendre diverses formes géométriques en fonction notamment de la forme et de la taille du module d'éclairage 8. Elle est disposée en regard du module 8 en tenant compte des moyens de positionnement et de guidage entre le module 8 et le support 10.

La figure 2 montre le boîtier 4 vu depuis l'arrière, ainsi que la glace 6. Le boîtier comprend à sa face supérieure deux contours prédécoupés 16 formant ainsi deux portions de paroi 18 donnant accès au volume intérieur du projecteur. Chacune de ces portions de paroi 18 donne accès à un module d'éclairage et/ou de signalisation. Le module d'éclairage 8 visible à la figure 1 est un premier exemple de module d'éclairage du projecteur, étant entendu que ce dernier peut renfermer d'autre(s) module(s) d'éclairage et/ou de signalisations.

L'accès à la face supérieure du boîtier est habituellement assez aisé. Cette disposition est cependant préférentielle et non essentielle. Il existe en effet des positions autres, telles que par exemple sur le côté et/ou sur l'arrière. L'accès au volume interne du boîtier peut également se faire par la glace qui peut être démontable.

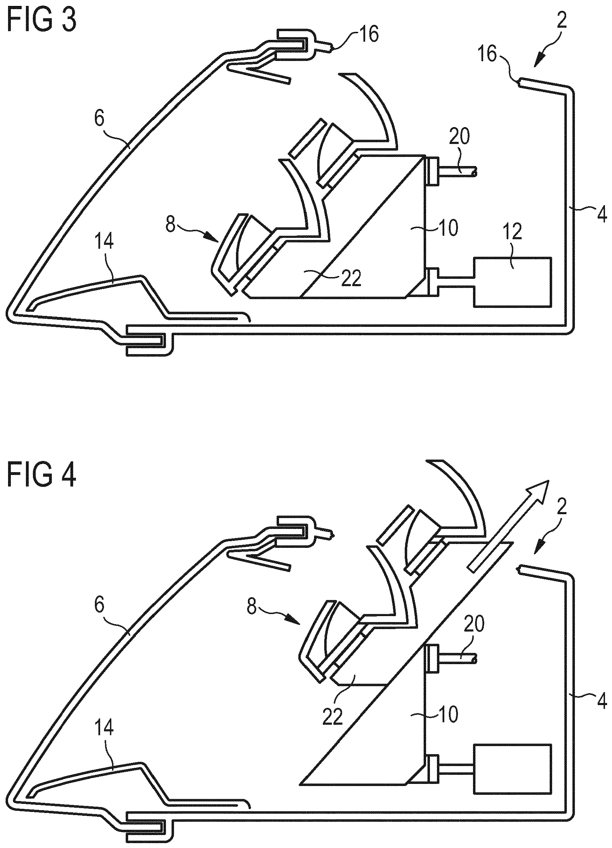

A la figure 3, le boîtier 4 du projecteur 2 de la figure 1 a été ouvert par enlèvement de la portion de paroi prédécoupée. Cette ouverture donne accès au volume interne du boîtier 4 et plus particulièrement un accès direct au module d'éclairage 8. Dans le cas précis de cet exemple de réalisation, la face supérieure du boîtier présente une surface important et le fait de pratiquer une ouverture sur cette face permet de créer un accès suffisamment grand pour extraire le module 8.

La figure 4 illustre le mouvement d'extraction du module d'éclairage 8 du boîtier 4. La surface de montage 22 du module 8 sur le support 10 est généralement plane et inclinée vers l'arrière et le haut ou, de manière équivalente, vers l'avant et le bas. Le plan moyen formé par cette surface de montage forme un angle d'environ 45° avec un plan horizontal. Le module 8, ou plus particulièrement sa surface de montage 22 comprend des moyens à glissière coopérant avec des moyens à glissière correspondants du support 10. Ces moyens sont disposés de manière à former une liaison à glissement ou translation entre le module 8 et le support 10. La direction de glissement de ces moyens est généralement orientée vers l'ouverture pratiquée ou praticable dans la paroi du boîtier 4. Dans le cas précis de cet exemple de réalisation, la direction des moyens à glissière (illustrée par la flèche) est orientée généralement dans un plan longitudinal de manière à ce que le mouvement d'extraction du module 8 se fasse généralement vers l'arrière et le haut du projecteur.

Pour extraire le module 8 du boîtier 4, il convient de libérer les moyens de fixation ou blocage empêchant le déplacement du module selon la direction de glissement. Ces moyens (non représentés) peuvent prendre diverses formes comme par exemple un ou plusieurs taquets mobiles selon une direction généralement perpendiculaire à la direction de glissement du module par rapport au support. Les moyens de fixation ou blocage peuvent également comprendre un ou plusieurs dispositifs de serrage à came agissant essentiellement dans une direction généralement perpendiculaire à la direction de glissement du module par rapport au support.

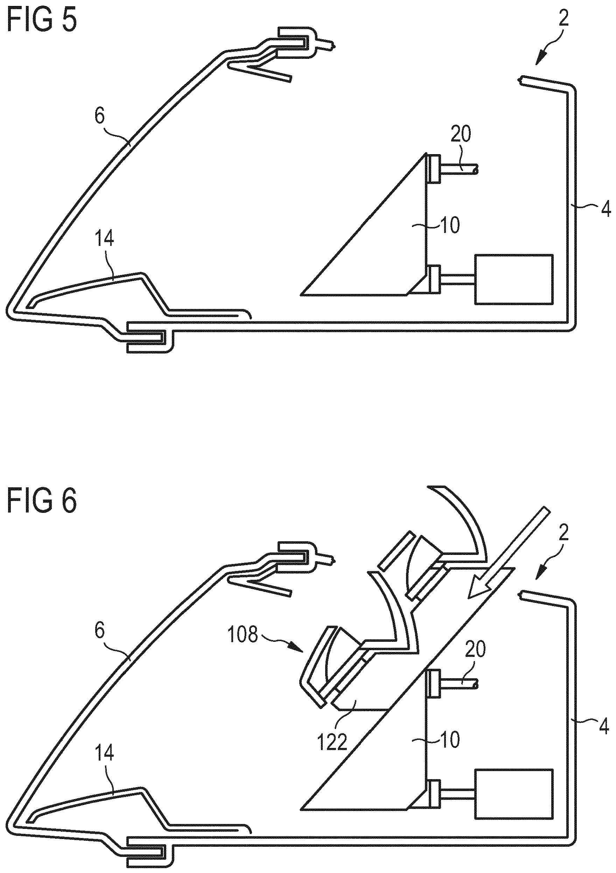

La figure 5 illustre le projecteur 2 sans le module, c'est-à-dire dans un état où le module a été extrait par l'ouverture pratiquée dans la paroi du boîtier 4.

A la figure 6, un module d'éclairage de remplacement 108 est illustré dans une position intermédiaire lors du mouvement de positionnement par rapport au support 10. Le module de remplacement 108 peut être le module initial après vérification, maintenance ou révision, ou encore un autre module équivalent destiné à remplacer le module initial. Grâce aux moyens de positionnement à glissière, le module 108 peut être guidé selon un mouvement de translation jusqu'à une position finale correspondant à une mise en butée entre le module et le support. L'inclinaison vers le bas de la direction de glissement du module par rapport au support est particulièrement intéressante car elle permet une mise en position finale stable par l'effet de gravité. Aucun effort particulier ne doit être maintenu sur le module jusqu'à l'activation des moyens de fixation ou de blocage. Cette mesure est garante d'une précision de montage, cette précision étant particulièrement importante pour des projecteurs dont la géométrie des fonctions d'éclairage, en particulier la fonction « route », doit être respectée pour des raisons de réglementation.

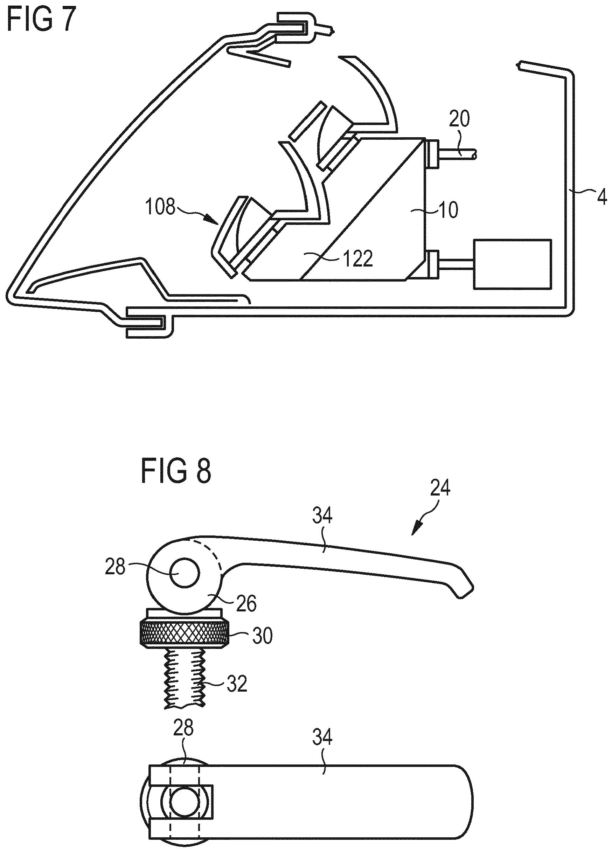

La figue 7 illustre le module de remplacement 108 dans sa position finale sur le support 10. Les moyens de fixation et/ou de blocage (non représentés à la figure 7) sont alors activés de manière à empêcher tout mouvement relatif entre le module 108 et le support 10.

L'ouverture pratiquée dans le boîtier 4 peut ensuite être refermée par la remise en place de la portion de paroi qui a été détachée. Sa fixation peut être assurée par collage.

La figure 8 illustre un exemple de réalisation des moyens de blocage du module le long des moyens à glissière par rapport au support. Il s'agit d'un levier à came 24 où la rotation du levier 34 agit via une came 26 du levier et une liaison à pivot 28 sur une tige 32. La came 28 solidaire du levier 34 glisse sur une surface d'appui 30 et déplace l'axe pivot 28 selon une direction longitudinale de la tige 32. Ce mouvement de petite amplitude permet d'exercer un effort amplifié sur la tige 32. Dans le cas de l'exemple de réalisation qui a été décrit, la tige peut être solidaire d'un élément coulissant dans une glissière du support ou du module, le levier à came étant disposé sur l'autre du support et du module. L'actionnement du levier permet alors d'exercer un effort de placage de l'élément coulissant sur la glissière et, partant, un placage du support et du module l'un sur l'autre.

D'autres dispositifs de fixation et/ou de blocage notamment bien connus en soi de l'homme de métier peuvent bien sûr être mis en œuvre dans le cadre de l'invention.

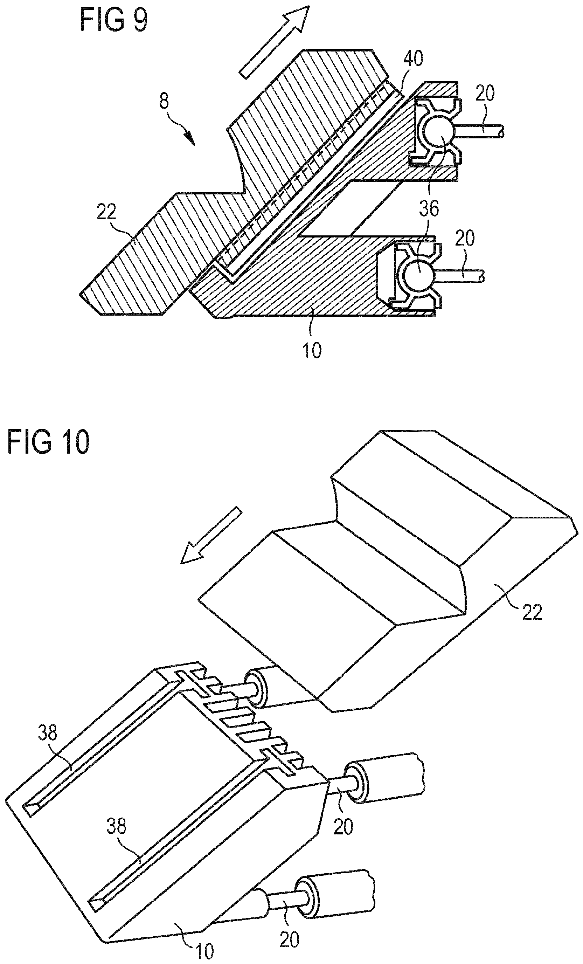

Les figures 9 et 10 illustrent avec d'avantage de détails la base 22 du module et le support 10, notamment les moyens de positionnement à glissières. Le support 10 est de construction massive. Il comprend à sa partie arrière des points de fixation à rotule 36 assurant la liaison entre le support 10 et les tiges 20 de fixation du support au boîtier. Les points de fixation à rotule 36 peuvent être des capsules de fixation bien connues en soi de l'homme de métier. On peut observer à la figure 10 que le support comprend deux glissières 38 sur sa face de montage du module. Ces deux glissières ont une section de forme générale en T de manière à assurer une double fonction de guidage dans le plan général de la face de montage et une fonction de rétention selon une direction généralement perpendiculaire audit plan. Les deux glissières sont généralement parallèles. Elles sont formées directement dans la masse du support 10. Ce dernier est préférentiellement en matériau métallique comme de l'aluminium apte à assurer une fonction de refroidissement des LEDs. Il est d'ailleurs à noter que des ailettes de refroidissement peuvent être prévues à l'arrière du support 10. Les glissières s'arrêtent avant le bord inférieur du support afin d'assurer une fonction de butée. La base 22 du module comprend des glissières correspondantes 40 aptes à coopérer avec les glissières 38 du support 10. Dans le cas précis de l'exemple de réalisation qui est décrit, le support comprend des glissières sous forme de rainures et la base comprend des glissières correspondantes sous forme de nervures. L'inverse peut bien sûr également être mis en œuvre avec l'invention. On pourrait également prévoir une combinaison de ces deux configurations, à savoir où le support comprend au moins une glissière sous forme de rainure et au moins une glissière sous forme de nervure, et de même pour la base du module.

Ces moyens à glissière(s) ont pour rôle d'assurer le guidage du module lors de son extraction et/ou de sa mise en place dans le boîtier et son positionnement par rapport au support.

## Revendications

1. Dispositif d'éclairage et/ou de signalisation (2) pour véhicule, comprenant un boîtier (4), un module d'éclairage et/ou de signalisation (8 ; 108) et un support (10) dudit module, le module et le support étant disposé à l'intérieur dudit boîtier, le module d'éclairage et/ou de signalisation (8 ;108) comprenant :
au moins une source lumineuse de type diode à électroluminescence apte à émettre des rayons lumineux ;
au moins une surface réfléchissante (9, 11) apte à réfléchir les rayons lumineux émis par la source lumineuse en un faisceau d'éclairage et/ou de signalisation suivant un axe optique du module ;
des moyens de positionnement rapide (40) comprenant des moyens à glissière(s) du module (8 ; 108) sur un support (10), le support (10) dudit module comprenant des moyens de positionnement rapide (38) comprenant des moyens à glissière(s) destinés à coopérer avec les moyens de positionnement rapide correspondants (40) du module (8, 108),
**caractérisé en ce que** le support (10) comprend une surface transversale de montage du module (8, 108), ladite surface transversale formant un angle d'inclinaison avec un plan horizontal qui est compris entre 20° et 70°, plus préférentiellement entre 30° et 50°, et **en ce que** le boîtier (4) comprend des moyens d'ouverture rapide (16, 18) aptes à permettre la sortie du module (8, 108) par déplacement par rapport au support (10), le déplacement étant guidé par les moyens de positionnement rapide (38, 40) à glissière(s), les moyens d'ouverture rapide comprenant au moins un parmi les moyens suivants : une trappe amovible (18), une portion de paroi (18) du boîtier prédécoupée (16).

2. Dispositif selon la revendication 1, **caractérisé en ce qu'**une composante de la direction de glissement des moyens de positionnement rapide (40) à glissière(s) du module correspond à l'axe optique du module.

3. Dispositif selon l'une des revendications 1 et 2, **caractérisé en ce que** les moyens de positionnement rapide (40) à glissière(s) du module sont disposés latéralement par rapport au module (8 ; 108).

4. Dispositif selon l'une des revendications 1 à 3, **caractérisé en ce que** les moyens de positionnement rapide (40) à glissière(s) du module sont configurés de manière à ce que le positionnement du module (8 ; 108) depuis un engagement avec le support (10) jusqu'à une position finale sur le support s'opère exclusivement par un mouvement de translation dudit module.

5. Dispositif selon l'une des revendications 1 à 4, **caractérisé en ce que** le module (8 ; 108) comprend un radiateur (22) de dissipation de la chaleur de la ou d'au moins une des sources lumineuses, les moyens de positionnement rapide (40) à glissière(s) du module (8, 108) étant sur le radiateur (22), les moyens de positionnement (40) étant préférentiellement formés dans le matériau du radiateur.

6. Dispositif selon l'une des revendications 1 à 5, **caractérisé en ce que** la direction de glissement des moyens de positionnement rapide (40) à glissière(s) du module s'étend longitudinalement dans un plan parallèle à un plan vertical orienté essentiellement selon l'axe optique du module.

7. Dispositif selon l'une des revendications 1 à 6, **caractérisé en ce que** la direction de glissement des moyens de positionnement rapide (40) à glissière(s) du module s'étend longitudinalement dans un plan transversal formant un angle d'inclinaison avec le plan horizontal qui est entre 20° et 70°, plus préférentiellement entre 30° et 50°.

8. Dispositif selon la revendication 7, **caractérisé en ce que** le plan transversal, dans lequel la direction de glissement des moyens de positionnement rapide (40) à glissière(s) du module s'étend, est incliné vers le bas et vers l'avant du module.

9. Dispositif selon l'une des revendications 1 à 8, **caractérisé en ce qu'**une composante de la direction de glissement des moyens de positionnement rapide (38) à glissière(s) du support correspond à l'axe optique du module (8, 108).

10. Dispositif selon l'une des revendications 1 à 9, **caractérisé en ce que** les moyens de positionnement rapide (38) à glissière(s) du support sont formés dans la surface de montage, le support comprenant des ailettes de refroidissement à l'arrière de la face de montage.

11. Dispositif selon l'une des revendications 1 à 10, **caractérisé en ce qu'**au moins un du module et du support comprend des moyens de fixation (24) du module au support.

12. Dispositif selon la revendication 11, **caractérisé en ce que** les moyens de fixation (24) sont configurés pour empêcher un mouvement de translation entre le module (8, 108) et le support (10), lesdits moyens étant préférentiellement à serrage et/ou blocage.

## Patentansprüche

1. Beleuchtungs- und/oder Signalgebungsvorrichtung (2) für ein Fahrzeug, umfassend ein Gehäuse (4), ein Beleuchtungs- und/oder Signalgebungsmodul (8; 108) und einen Träger (10) des Moduls, wobei das Modul und der Träger innerhalb des Gehäuses angeordnet sind, wobei das Beleuchtungs- und/oder Signalgebungsmodul (8; 108) Folgendes umfasst:
mindestens eine Lichtquelle vom Typ Elektrolumineszenzdiode, die dazu geeignet ist, Lichtstrahlen zu emittieren;
mindestens eine reflektierende Oberfläche (9, 11), die dazu geeignet ist, die von der Lichtquelle emittierten Lichtstrahlen in einem Beleuchtungs- und/oder Signalgebungsbündel entlang einer optischen Achse des Moduls zu reflektieren;
Schnellpositionierungsmittel (40), die Mittel mit Gleitschiene(n) des Moduls (8; 108) auf einem Träger (10) umfassen,
wobei der Träger (10) des Moduls Schnellpositionierungsmittel (38) umfasst, die Mittel mit Gleitschiene(n) umfassen, die dazu bestimmt sind, mit den entsprechenden Schnellpositionierungsmitteln (40) des Moduls (8, 108) zusammenzuwirken,
**dadurch gekennzeichnet, dass** der Träger (10) eine Querfläche zur Montage des Moduls (8, 108) umfasst, wobei die Querfläche mit einer horizontalen Ebene einen Neigungswinkel bildet, der zwischen 20° und 70°, bevorzugter zwischen 30° und 50°, liegt,
und dass das Gehäuse (4) Schnellöffnungsmittel (16, 18) umfasst, die dazu geeignet sind, die Herausnahme des Moduls (8, 108) durch Verschiebung relativ zum Träger (10) zu ermöglichen, wobei die Verschiebung durch die Schnellpositionierungsmittel (38, 40) mit Gleitschiene(n) geführt wird,
wobei die Schnellöffnungsmittel mindestens eines der folgenden Mittel umfassen: eine abnehmbare Klappe (18), einen Ausschnitt (16) aus einem Gehäusewandabschnitt (18).

2. Vorrichtung nach Anspruch 1, **dadurch gekennzeichnet, dass** eine Gleitrichtungskomponente der Schnellpositionierungsmittel (40) mit Gleitschiene(n) des Moduls einer optischen Achse des Moduls entspricht.

3. Vorrichtung nach einem der Ansprüche 1 und 2, **dadurch gekennzeichnet, dass** die Schnellpositionierungsmittel (40) mit Gleitschiene(n) des Moduls seitlich in Bezug auf das Modul (8; 108) angeordnet sind.

4. Vorrichtung nach einem der Ansprüche 1 bis 3, **dadurch gekennzeichnet, dass** die Schnellpositionierungsmittel (40) mit Gleitschiene(n) des Moduls so konfiguriert sind, dass die Positionierung der Module (8; 108) von einem Eingriff mit dem Träger (10) bis zu einer Endposition auf dem Träger ausschließlich durch eine Translationsbewegung des Moduls erfolgt.

5. Vorrichtung nach einem der Ansprüche 1 bis 4, **dadurch gekennzeichnet, dass** das Modul (8; 108) einen Radiator (22) zur Ableitung der Wärme von der oder mindestens einer der Lichtquellen umfasst, wobei sich die Schnellpositionierungsmittel (40) mit Gleitschiene(n) des Moduls (8, 108) auf dem Radiator (22) befinden, wobei die Positionierungsmittel (40) vorzugsweise im Material des Radiators ausgebildet sind.

6. Vorrichtung nach einem der Ansprüche 1 bis 5, **dadurch gekennzeichnet, dass** sich die Gleitrichtung der Schnellpositionierungsmittel (40) mit Gleitschiene(n) des Moduls längs in einer Ebene parallel zu einer vertikalen, im Wesentlichen entlang der optischen Achse des Moduls ausgerichteten Ebene erstreckt.

7. Vorrichtung nach einem der Ansprüche 1 bis 6, **dadurch gekennzeichnet, dass** sich die Gleitrichtung der Schnellpositionierungsmittel (40) mit Gleitschiene(n) des Moduls längs in einer Querebene erstreckt, die mit der horizontalen Ebene einen Neigungswinkel bildet, der zwischen 20° und 70°, bevorzugter zwischen 30° und 50°, beträgt.

8. Vorrichtung nach Anspruch 7, **dadurch gekennzeichnet, dass** die Querebene, in der sich die Gleitrichtung der Schnellpositionierungsmittel (40) mit Gleitschiene(n) des Moduls erstreckt, zur Unterseite und zur Vorderseite des Moduls hin geneigt ist.

9. Vorrichtung nach einem der Ansprüche 1 bis 8, **dadurch gekennzeichnet, dass** eine Komponente der Gleitrichtung der Schnellpositionierungsmittel (38) mit Gleitschiene(n) des Trägers der optischen Achse des Moduls (8, 108) entspricht.

10. Vorrichtung nach einem der Ansprüche 1 bis 9, **dadurch gekennzeichnet, dass** die Schnellpositionierungsmittel (38) mit Gleitschiene(n) des Trägers in der Montagefläche ausgebildet sind, wobei der Träger hinter der Montagefläche Kühlrippen umfasst.

11. Vorrichtung nach einem der Ansprüche 1 bis 10, **dadurch gekennzeichnet, dass** mindestens das Modul und/oder der Träger Mittel (24) zur Befestigung des Moduls am Träger umfassen.

12. Vorrichtung nach Anspruch 11, **dadurch gekennzeichnet, dass** die Befestigungsmittel (24) so konfiguriert sind, dass sie eine Translationsbewegung zwischen dem Modul (8, 108) und dem Träger (10) verhindern, wobei die Mittel vorzugsweise klemmend und/oder blockierend sind.

## Claims

1. Lighting and/or signaling device (2) for a vehicle comprising a housing (4), a lighting and/or signaling module (8; 108) and a support (10) of said module (8; 108), the module and the support being arranged inside said housing, the lighting and/or signaling module (8, 108) comprising:
at least one light source of the electroluminescent diode type suitable for emitting light rays;
at least one reflecting surface (9, 11) suitable for reflecting the light rays emitted by the light source in a lighting and/or signaling beam along an optical axis of the module;
means (40) for rapidly positioning the module (8; 108) comprising means with slider(s) of the module on a support (10)
the support (10) of said module comprising rapid positioning means (38) comprising means with slider(s) intended to cooperate with the corresponding rapid positioning means (40) of the module (8, 108)
**characterized in that** the support (10) comprises a transversal surface for mounting the module (8, 108), said transversal surface forming an angle of inclination with a horizontal plane which is between 20° and 70°, more preferentially between 30° and 50°,
and **in that** the housing (4) comprises rapid opening means (16, 18) suitable for allowing the module (8, 108) to be taken out by displacement in relation to the support (10), the displacement being guided by the rapid positioning means (38, 40) with slider(s),
the rapid opening means comprising at least one out of the following means: a removable hatch (18), a precut (16) portion of wall (18) of the housing.

2. Device according to Claim 1, **characterized in that** one component of the sliding direction of the rapid positioning means with slider(s) corresponds to the optical axis of the module.

3. Device according to either of Claims 1 and 2, **characterized in that** the rapid positioning means (40) with slider(s) of the module are arranged laterally in relation to the module (8; 108).

4. Device according to one of Claims 1 to 3, **characterized in that** the rapid positioning means (40) with slider(s) of the module are configured so that the positioning of the module (8; 108) from an engagement with the support (10) to a final position on the support is obtained exclusively by a translational movement of said module.

5. Device according to one of Claims 1 to 4, **characterized in that** the module (8; 108) comprises a heat dissipator (22) for dissipating heat from the or at least one of the light sources, the rapid positioning means (40) with slider(s) of the module being on the heat dissipator (22), the positioning means (40) preferentially being formed in the material of the heat dissipator.

6. Device according to one of Claims 1 to 5, **characterized in that** the main sliding direction of the rapid positioning means (40) with slider(s) of the module extends longitudinally in one plane parallel to a vertical plane oriented essentially on the optical axis of the module.

7. Device according to one of Claims 1 to 6, **characterized in that** the sliding direction of the rapid positioning means (40) with slider(s) of the module extends longitudinally in one transversal plane forming an angle of inclination with the horizontal plane which is between 20° and 70°, more preferentially between 30° and 50°.

8. Device according to Claim 7, **characterized in that** the transversal plane in which the sliding direction of the rapid positioning means (40) with slider(s) of the module extends are inclined downward and toward the front of the module.

9. Device according to one of Claims 1 to 8, **characterized in that** one component of the sliding direction of the rapid positioning means (40) with slider(s) of the support corresponds to the optical axis of the module (8, 108).

10. Device according to one of Claims 1 to 9, **characterized in that** the rapid positioning means (38) with slider(s) of the support are formed in the mounting surface, the support comprising cooling fins behind the mounting surface.

11. Device according to one of Claims 1 to 10, **characterized in that** at least one of the module and the support comprises means (24) for fixing the module to the support.

12. Device according to Claim 11, **characterized in that** the fixing means (24) are configured to prevent a translational movement between the module (8, 108) and the support (10), said means preferentially being gripping and/or immobilizing means.
